# EUROPEAN PATENT SPECIFICATION

(11) **EP 3 492 521 B1**
(45) Date of publication and mention of the grant of the patent: **18.11.2020**
(21) Application number: 17834540.1
(22) Date of filing: 28.07.2017
(51) Int. Cl.: C08L 21/00, B29D 30/54, B60C 1/00, B60C 11/02, B60C 13/00, C08K 3/22, C08K 5/09, C08K 5/098, C08K 3/04, C08K 3/36

(54) **RUBBER COMPOSITION, RETREADED TIRE OBTAINED USING SAME, AND PROCESS FOR PRODUCING SAID RETREADED TIRE**
KAUTSCHUKZUSAMMENSETZUNG, DAMIT HERGESTELLTER RUNDERNEUERTER REIFEN UND VERFAHREN ZUR HERSTELLUNG DES RUNDERNEUERTEN REIFENS
COMPOSITION DE CAOUTCHOUC, PNEU RECHAPÉ OBTENU À L'AIDE DE LADITE COMPOSITION DE CAOUTCHOUC ET PROCÉDÉ DE PRODUCTION DUDIT PNEU RECHAPÉ

(30) Priority: 29.07.2016 JP 2016149899; 11.07.2017 JP 2017135130
(43) Date of publication of application: 05.06.2019
(73) Proprietor: Bridgestone Corporation, Tokyo 104-8340 (JP)
(72) Inventor: MIYAZAKI Toru, Tokyo 104-8340 (JP)
(74) Representative: Oxley, Robin John George
(86) International application number: PCT/JP2017/027468
(87) International publication number: WO 2018/021538

(56) References cited:
- EP-A1- 1 388 567
- EP-A1- 2 935 447
- JP-A- 2010 270 266
- US-A1- 2006 225 615
- US-A1- 2006 281 009
- US-A1- 2010 317 782
- US-A1- 2013 079 445
- US-A1- 2015 299 444
- US-B1- 8 813 802
- OTTO S: "New Refernce Value for the Description of Filler Dispersion with the Dispergrader 1000 NT", KAUTSCHUK GUMMI KUNSTST,, vol. 58, no. 7-8, 1 January 2005 (2005-01-01), pages 390-393, XP009189116,

## Description

### Technical field

The present invention relates to a rubber composition, a retreaded tire including the rubber composition, and a method for producing the retreaded tire, and more particularly, a rubber composition having a specific aggregate density distribution, a retreaded tire including a case rubber including the rubber composition, and a method for producing the retreaded tire.

### Background art

Retreaded tires are gaining importance not only from the perspective of economy, but also reduction of environmental load by tire production.

A retreaded tire is produced by, for example, abrading away the tread surface of a tire of which primary service life has completed, to a predetermined dimension to produce a base tire, and then fixing or forming new treads on the base tire again.

In the production of a retreaded tire for a pneumatic tire, to ensure the safety, a case portion of a pneumatic tire, which is usable over a long period of time and highly durable, is indispensable, and high resistance against crack growth is required for a rubber composition used for a case rubber forming the member of the case portion.

Various techniques are known as a method for enhancing durability of a retreaded tire. For example, use of a cushion rubber composition for retreaded tires, the composition including from 20 to 100 parts by weight of a carbon black and from 5 to 20 parts by weight of a modified liquid rubber per 100 parts by weight of a diene-based rubber, is known to reduce rubber components called occluded rubbers, which is occluded in carbon black aggregates. Such a composition is known to enhance the durability of a retreaded tire (Patent Document 1).

However, neither reducing aggregates in a rubber composition of a retreaded tire, nor the aggregates themselves, serving as fracture nucleuses, reducing resistance against crack growth is described in Patent Document 1. Furthermore, it is not described that enhancement of resistance against crack for a rubber composition of a case rubber can lead to enhanced durability of a tire.

Reference is also made to EP 1388567 A1, US 2006/281009 A1, US 2015/299444 A1, US 8813802 B1, EP 2935447 A1, US 2013/079445 A1, US 2006/225615 A1, US 2010/317782 A1, Otto S., Kautschuk Gummi Kunststoffe, vol. 58, no. 7-8, 2005, pages 390-393, and JP 2010-270266 A.

### Conventional art document

### Patent document

Patent Document 1: Japanese Patent Application Laid-open No. 2016-84405 A (Claims, Examples, and others)

### Summary of the invention

### Problems to be solved by the invention

The present invention is, in view of the problems of the known techniques and the present state, to solve such problems, and an object of the present invention is to provide a retreaded tire, wherein the retreaded tire, including the case rubber including the rubber composition for tires, the rubber composition having a specific composition and a specific aggregate density, can sufficiently reduce aggregates, which may cause rubber cracks, in the rubber composition constituting the case rubber, thus providing a retreaded tire including a rubber composition, having a high resistance against crack growth, for a case rubber, particularly a case rubber suitable for heavy-duty retreaded tires including those for aircrafts use.

### Means to solve problems

As a result of diligent investigations to solve the problems in the related art, the present inventor found that one of the factors that increase the tendency to form and develop cracks in tires is the formation of aggregates in a rubber composition for tires. More specifically, the present inventor found that the aggregates serve as fracture nucleuses and cracks are formed from the aggregates as starting points, reducing the resistance against crack growth of a vulcanized rubber composition.

Furthermore, the present inventor also found that, to improve properties such as fracture resistance of the rubber composition, in addition to zinc oxide (zinc white), compounding a fatty acid or a zinc salt of fatty acid or both to a rubber composition and suppressing formation of aggregates of a zinc salt of fatty acid and the like can improve resistance against crack growth of the rubber composition.

Thus, the present inventor found that a retreaded tire including a case rubber including a rubber composition, wherein, when a cross section of the rubber composition is examined with a dispergrader based on ASTM D7723, an integrated value of white areas by particles for diameter of 29 µm or more is 15% or less of an integrated value of white areas by particles for diameter from 3 to 57 µm, and the rubber composition contains 2 parts by weight or more and less than 13 parts by weight of a zinc salt of fatty acid per 100 parts by weight of a rubber, can provide an intended rubber composition described above and a pneumatic tire including the rubber composition, and accomplished the present invention.

That is, the present invention resides in the following (1) to (13).
(1) A rubber composition, wherein, an integrated value of white areas by particles for diameter of 29 µm or more is 15% or less of an integrated value of white areas by particles for diameter from 3 to 57 µm, and a value of (white area%) × (integrated value of white areas by particles for diameter of 29 µm or more)/(integrated value of white areas by particles for diameter from 3 to 57 µm) is 0.2% or less in an examination of a cross section of the rubber composition with a dispergrader based on ASTM D7723; and a total content of zinc oxide, a fatty acid, and a zinc salt of fatty acid is 2 parts by weight or more and less than 13 parts by weight per 100 parts by weight of a rubber.
(2) The rubber composition according to (1) described above, including a fine particulate zinc oxide in an amount of 1 part by weight or more and 10 parts by weight or less per 100 parts by weight of the rubber.
(3) The rubber composition according to (1) or (2) described above, including the fine particulate zinc oxide with a specific surface area of not less than 50 m²/g in an amount of 0.5 parts by weight or more and 8 parts by weight or less per 100 parts by weight of the rubber.
(4) The rubber composition according to any one of (1) to (3) described above, including the zinc salt of fatty acid, wherein a ratio of a total parts by weight of the fatty acid and a fatty acid component in the zinc salt of fatty acid to parts by weight of zinc oxide is from 0.15 to 1.5.
(5) The rubber composition according to any one of (1) to (4) described above, wherein a content attributed to an unsaturated fatty acid is 30% or more in the fatty acid component in the zinc salt of fatty acid.
(6) The rubber composition according to any one of (1) to (5) described above, including a filler.
(7) The rubber composition according to any one of claims 1 to 6, including both a carbon black and a silica as the filler, wherein an amount of the silica relative to a total amount of the filler is 0% or more and 30% or less.
(8) A retreaded tire including the rubber composition described in any one of claims 1 to 7.
(9) The retreaded tire according to claim 8, which is a heavy-duty tire.
(10) A method for producing a retreaded tire, selectively using only a base tire including a case rubber, the case rubber including a rubber composition having a total content of zinc oxide, a fatty acid, and a zinc salt of fatty acid of 2 parts by weight or more and less than 13 parts by weight per 100 parts by weight of a rubber to produce a retreaded tire including the case rubber including the rubber composition; wherein, an integrated value of white areas by particles for diameter of 29 µm or more is 15% or less of an integrated value of white areas by particles for diameter from 3 to 57 µm in the rubber composition of the case rubber, in an examination of a cross section of the rubber composition with a dispergrader based on ASTM D7723.
(11) The method for producing a retreaded tire according to claim 10, wherein the rubber composition constituting the case rubber included in the retreaded tire is a rubber composition produced by mixing a wet master batch including zinc oxide.
(12) The method for producing a retreaded tire according to claim 10 or 11, wherein the base tire is produced by selectively using a used tire including a case rubber including a rubber composition having a total content of zinc oxide, a fatty acid, and a zinc salt of fatty acid of 2 parts by weight or more and less than 13 parts by weight per 100 parts by weight of a rubber.
(13) The method for producing a retreaded tire according to any one of (10) to (12) described above, wherein the retreaded tire is produced by a precuring method or a remolding method.

### Effects of the invention

The present invention provides a rubber composition having good properties, such as high fracture resistance, and high resistance against crack growth; and a retreaded tire including the rubber composition; and a method for producing the retreaded tire.

The retreaded tire having the enhanced resistance against crack growth and the method for producing the retreaded tire according to the present invention can achieve enhanced safety, reduction in environmental load, and enhanced economy by saving resources.

The retreaded tire of the present invention containing a zinc salt of fatty acid enhances properties such as fracture resistance as well as resistance against crack growth. Thus, enhanced durability and safety of the retreaded tire of the present invention in use can be achieved.

### Embodiments of the invention

Embodiments of the present invention will be described in detail below.

A rubber composition of an embodiment of the present invention is a rubber composition, wherein, an integrated value of white areas by particles for diameter of 29 µm or more is 15% or less of an integrated value of white areas by particles for diameter from 3 to 57 µm, and a value of (white area%) × (integrated value of white areas by particles for diameter of 29 µm or more) / (integrated value of white areas by particles for diameter from 3 to 57 µm) is 0.2% or less in an examination of a cross section of the rubber composition with a dispergrader based on ASTM D7723; and a total content of zinc oxide, a fatty acid, and a zinc salt of fatty acid is 2 parts by weight or more and less than 13 parts by weight per 100 parts by weight of a rubber.

A retreaded tire according to an embodiment of the present invention is a retreaded tire including the rubber composition. In addition, a method for producing a retreaded tire according to an embodiment of the present invention is a method for producing a retreaded tire, selectively using only a base tire including a case rubber, the case rubber including a rubber composition having a total content of zinc oxide, a fatty acid, and a zinc salt of fatty acid of 2 parts by weight or more and less than 13 parts by weight per 100 parts by weight of a rubber to produce a retreaded tire including the case rubber including the rubber composition; wherein, an integrated value of white areas by particles for diameter of 29 µm or more is 15% or less of an integrated value of white areas by particles for diameter from 3 to 57 µm in the rubber composition of the case rubber in an examination of a cross section of the rubber composition with a dispergrader based on ASTM D7723, .

The reasons that the rubber composition according to an embodiment of the present invention and the retreaded tire including the rubber composition have high resistance against crack growth are speculated as follows. That is, in a rubber composition containing a fatty acid, zinc oxide, and a zinc salt of fatty acid, the zinc salt of fatty acid aggregates having a relatively large particle diameter 29 µm or more may be formed. Preventing formation of the aggregates and sufficiently reducing the fracture nucleuses in the rubber composition significantly enhances resistance against crack growth.

In addition, a rubber composition containing a fatty acid, zinc oxide, and a zinc salt of fatty acid has good properties such as high fracture resistance. The rubber composition constituting the case rubber of the retreaded tire according to an embodiment of the present invention, having a total content of zinc oxide, a fatty acid, and a zinc salt of fatty acid of 2 parts by weight or more and less than 13 parts by weight per 100 parts by weight of the rubber, may have good properties such as high fracture resistance.

For the reasons for high resistance against crack growth of the retreaded tire, as described above, the method for producing a retreaded tire described above can provide a retreaded tire having good properties such as high fracture resistance.

The rubber component present in the rubber composition constituting the case rubber of the retreaded tire according to an embodiment of the present invention is not particularly limited as long as the component is for tires such as pneumatic tires, and examples of the rubber component having a double bond in a main chain (diene-based rubber) include natural rubbers and/or diene-based synthetic rubbers. The rubber component is vulcanized as necessary during the production of new tires, and thus the rubber component has undergone sulfur-crosslinking and the like.

The rubber component may be specifically a rubber component produced from at least one type of natural rubbers (NR), synthetic isoprene rubbers (IR), styrene-butadiene copolymers, polybutadiene rubbers, isoprene rubbers, ethylene-propylene-diene copolymers, chloroprene rubbers, halogenated butyl rubbers, acrylonitrile-butadiene rubbers, and the like.

From the perspective of fracture toughness, the rubber component includes natural rubber and/or a styrene-butadiene copolymer (SBR), vulcanized as necessary in an amount preferably 50 parts by weight or more, and more preferably 80 parts by weight or more per 100 parts by weight of the rubber component.

### [Aggregate]

In an embodiment of the present invention, the aggregate means an aggregate including, in addition to a zinc salt of fatty acid aggregate, those formed by aggregation of one or two or more kinds of fillers such as a carbon black and a silica, and other additives such as a vulcanizing agent and a vulcanization accelerator, and present in a particle diameter 3 µm or more in the rubber composition.

The zinc salt of fatty acid included in the rubber composition constituting the case rubber of the retreaded tire according to an embodiment of the present invention may be added as a zinc salt of fatty acid during the production of new tires or may be formed by a reaction of a zinc salt such as zinc oxide, or a zinc compound with a fatty acid.

### [Zinc oxide]

The rubber composition constituting the case rubber of the retreaded tire according to an embodiment of the present invention may contain zinc oxide (zinc white).

From the perspective of dispersibility of zinc oxide, the rubber composition constituting the case rubber of the retreaded tire according to an embodiment of the present invention may be added as a master batch including zinc oxide in a production step during the production of new tires.

The zinc oxide (zinc white) included in the rubber composition constituting the case rubber of the retreaded tire according to an embodiment of the present invention may be one used as a vulcanization accelerator.

From the perspective of vulcanizing acceleration, the desirable composition including zinc oxide includes zinc oxide at least from 0.5 to 10 parts by weight, preferably from 1 to 8 parts by weight, and more preferably from 1.5 to 6 parts by weight, per 100 parts by weight of the rubber component.

The zinc oxide included in the rubber composition is preferably a fine particle diameter zinc oxide. The specific surface area of the fine particle diameter zinc oxide is 2 m²/g or more, preferably 10 m²/g or more, more preferably 40 m²/g or more , still more preferably 50 m²/g or more, and even still more preferably 60 m²/g or more. In addition, the specific surface area of the zinc oxide is preferably 120 m²/g or less.

In an embodiment of the present invention, the rubber composition constituting the case rubber of the retreaded tire contains a fine particle diameter zinc oxide with a specific surface area of 50 m²/g or more preferably in an amount 0.5 parts by weight or more and 8 parts by weight or less, and more preferably 2 parts by weight or more and 8 parts by weight or less per 100 parts by weight of the rubber.

The fine particle diameter zinc oxide with a large surface area can suppress the generation of aggregates having a large particle diameter.

### [Fatty acid]

In an embodiment of the present invention, the fatty acid may be added as a single component, and the fatty acid may also be added as a fatty acid component of the zinc salt of fatty acid.

In the present specification, the fatty acid component includes not only a fatty acid present as a single component but also a fatty acid moiety that is present as a dissociated fatty acid or a counter ion of a metal ion such as zinc ion.

Examples of the fatty acid included in the rubber composition constituting the case rubber of the retreaded tire according to an embodiment of the present invention includes the fatty acid component (including a fatty acid in the form of a zinc salt of fatty acid) with an average molecular weight of 230 or less included in the rubber composition, or the fatty acid component including an unsaturated fatty acid 30% or more.

The fatty acid included in the rubber composition constituting the case rubber of the retreaded tire according to an embodiment of the present invention is not limited as long as the fatty acid does not fail the advantageous effects of the present invention, but fatty acids having 8 or more carbons are preferred, and linear-chain fatty acids having from 8 to 18 carbons are more preferred. In addition, the fatty acid may be a saturated fatty acid or an unsaturated fatty acid, and in a case of an unsaturated fatty acid, the unsaturated fatty acid having one or two double bonds is preferred.

Examples of the fatty acid include at least one type (each used alone or a mixture of two or more kinds thereof) of saturated fatty acids such as caprylic acid, pelargonic acid, capric acid, lauric acid, and mystiric acid; and unsaturated fatty acids such as oleic acid, linoleic acid, and vaccenic acid.

### [Zinc salt of fatty acid]

The zinc salt of fatty acid included in the rubber composition constituting the case rubber of the retreaded tire according to an embodiment of the present invention is not limited as long as the zinc salt of fatty acid does not fail the advantageous effects of the present invention. The zinc salt of fatty acid containing a fatty acid having 8 or more carbons as a fatty acid component are preferred, and the zinc salt of fatty acid containing a straight-chain fatty acid having from 8 to 18 carbons as a fatty acid component are more preferred. In addition, the fatty acid in the zinc salt of fatty acid may be a saturated fatty acid or an unsaturated fatty acid, and in a case of an unsaturated fatty acid, the unsaturated fatty acid having one or two double bonds is preferred.

Examples of the fatty acid that constitutes the fatty acid component of the zinc salt of fatty acid specifically include mystiric acid (average molecular weight 228.37), oleic acid (number of double bond of 1, average molecular weight 282.46), caprylic acid (average molecular weight 144.21), pelargonic acid (average molecular weight 158.23), capric acid (average molecular weight 172.26), lauric acid (average molecular weight 200.32), linoleic acid (number of double bonds of 2, average molecular weight 280.45), and vaccenic acid (number of double bond of 1, average molecular weight 282.46).

In an embodiment of the present invention, the average molecular weight of the fatty acid component in the zinc salt of fatty acid included in the case rubber of the retreaded tire according to an embodiment of the present invention is preferably 230 or less, or the content attributed to an unsaturated fatty acid is 30% or more in the fatty acid component in the zinc salt of fatty acid. 1) In a case where a saturated fatty acid (and a zinc salt of saturated fatty acid) is used in the fatty acid component in the fatty acid and zinc salt of fatty acid, the average molecular weight of the saturated fatty acid (including those present in the form of a zinc salt of saturated fatty acid) is preferably 230 or less, and examples of such a saturated fatty acid include myristic acid, lauric acid, capric acid, and caprylic acid; 2) an unsaturated fatty acid (and a zinc salt of unsaturated fatty acid) is preferred; and 3) in a case where a saturated fatty acid (and a zinc salt saturated fatty acid) and an unsaturated fatty acid (and a zinc salt of unsaturated fatty acid) are allowed to coexist, the total of the saturated fatty acid with a molecular weight 230 or less and the unsaturated bond-containing fatty acid is preferably 30 or more.

The rubber composition constituting the case rubber of the retreaded tire according to an embodiment of the present invention has a total content of the fatty acid, the zinc oxide, and the zinc salt of fatty acid of preferably 2 parts by weight or more and less than 13 parts by weight, more preferably 4 parts by weight or more and less than 13 parts by weight, and still more preferably 7 parts by weight or more and less than 13 parts by weight, per 100 parts by weight of the rubber.

The rubber composition having a total content of the fatty acid, the zinc oxide, and the zinc salt of fatty acid of 13 parts by weight or more exhibits no improvement in properties such as resistance against crack growth and fracture, and such a composition is not preferable.

In addition to the rubber component, the zinc oxide, the fatty acid and/or the zinc salt of fatty acid, the rubber composition may contain a filler usually used in rubber compositions such as a rubber composition for tire treads. For example, the rubber composition may contain a carbon black and an inorganic filler such as a silicate compound-based filler including a silica.

### [Filler]

### [Carbon black]

The carbon black included in the rubber composition is not particularly limited, and any of known carbon blacks commonly used as reinforcing fillers for rubbers may be used. Examples of the carbon black include GPF (N660), FEF (N550), SRF (N774), HAF (N330), ISAF(N220), ISAF-HS(N234), and SAF(N110). Preferred are carbon blacks with a nitrogen adsorption specific surface area (N₂SA) from 30 to 150 m²/g and a dibutyl phthalate (DBP) oil absorption from 60 to 140 cm³/100 g (for example, N234, N110, N220, N550, N326, and N330). Still more preferred are N550, N326, and N330. The use of these carbon blacks effectively enhances the improvement on various physical properties.

The content of the carbon blacks is preferably from 20 to 60 parts by weight per 100 parts by weight of the rubber component from the perspective of heat generation and resistance against crack growth.

### [Silica and silane coupling agent]

The silicate compound-based filler such as silica may be included in the rubber composition constituting the case rubber of the retreaded tire according to an embodiment of the present invention, and is not particularly limited. Examples thereof include a wet silica (hydrated silicic acid), a dry silica (silicic anhydride), calcium silicate, and aluminum silicate, and among silica, a wet silica, which is excellent in a fracture property, is preferred. In addition, a silicate compound-based filler may also be used in combination with the carbon black. The silica has a cetyltrimethylammonium bromide (CTAB) specific surface area of preferably 50 m²/g or more , more preferably 90 m²/g or more, and preferably 350 m²/g or less, and more preferably 300 m²/g or less.

The amount of the silica which may be included in the rubber composition constituting the case rubber of the retreaded tire according to an embodiment of the present invention may be 0 parts by weight per 100 parts by weight of the rubber and may be greater than 0 parts by weight, for example, 5 parts by weight or more per 100 parts by weight of the rubber. The amount of the silica is preferably 30 parts by weight or less, more preferably 20 parts by weight or less, and still more preferably 15 parts by weight or less, per 100 parts by weight of the rubber.

The amount of the silica relative to the total amount of the fillers is not particularly limited, but the amount is preferably 10% or more and more preferably 15% or more. In addition, the amount of the silica is preferably 30% or less and more preferably 25% or less.

In a case of using the silica as a filler, the silica may be a silica treated with a silane coupling agent. The silane coupling agent is not particularly limited and may be one well known and used for rubber compositions in the related art, for example, bis(3-triethoxysilylpropyl)polysulfide, γ-mercaptopropyltriethoxysilane, γ-aminopropyltriethoxysilane, N-phenyl-γ-aminopropyltrimethoxysilane, and N-β-(aminoethyl)-γ-aminopropyltrimethoxysilane. The content of the silane coupling agent used as desired is selected from a range commonly from 1 to 20% by mass relative to the silica. The silane coupling agent with the amount in the range described above can fully exert the effect as the coupling agent, and does not cause gelation of the rubber component. From the perspective of the effect as a coupling agent, prevention of gelation, and the like, the preferred content of the silane coupling agent is in a range from 5 to 15% by mass relative to the silica.

In a case where a natural rubber is used as the rubber component, those constituted of a master batch of the carbon black and/or the silica, and a natural rubber; preferably those constituting a master batch of the carbon black and a natural rubber is preferably used, from the perspective of workability and heat generation.

The natural rubber master batch may include a dry master batch or a wet master batch.

Here, the dry master batch is a master batch prepared by kneading a natural rubber and carbon black using a kneader such as a Banbury mixer, an internal mixer, and a roll.

The wet master batch is a master batch prepared by mixing a natural rubber latex and carbon black, and the wet master batch is preferably prepared by dispersing carbon black in water to form a slurry in advance and then mixing the slurry with the natural rubber latex. To improve dispersibility of carbon black, a rotor-stator-type high shear mixer, a high-pressure homogenizer, an ultrasonic homogenizer, a colloid mill, or the like is desirably used to mix carbon black homogeneously.

Furthermore, to enhance dispersibility of the carbon black, a continuous kneader is preferably used to dry a wet master batch, and a twin-screw kneading extruder is more preferably used as a continuous kneader. For more enhanced dispersity, a wet master batch is more preferred.

The natural rubber carbon black master batch as described above can prevent carbon black from localizing into the synthetic rubber even in a case where both the natural rubber and a synthetic rubber such as a diene-based synthetic rubber are used in combination.

In addition to the rubber component, zinc oxide, the fatty acid and/or the zinc salt of fatty acid, the filler, sulfur serving as a vulcanizing agent described above, the rubber composition constituting the case rubber of the retreaded tire according to an embodiment of the present invention may include a compounding ingredient commonly used in the rubber industry, such as a vulcanization accelerator (thiazole-based, sulfenamide-based, dithioate salt-based), an anti-oxidant, and workability improving agent, in a range not to fail the advantageous effects of the present invention.

The rubber composition constituting the case rubber of the retreaded tire according to an embodiment of the present invention has a low density of a zinc salt of fatty acid aggregate with a particle diameter of 29 µm or more and thus is less likely to form a part of rubber with weak strength and fracture nucleuses, and can significantly enhance resistance against crack growth.

The rubber composition constituting the case rubber of the retreaded tire according to an embodiment of the present invention may be produced by, for example, kneading, heating, and extruding the rubber component, zinc oxide, the fatty acid and/or the zinc salt of fatty acid having the properties described above, the filler, a vulcanizing agent, a vulcanization accelerator, an anti-oxidant, and the like.

### [Case rubber]

In the present specification, the case rubber refers to a rubber member used to compose portions such as a side wall portion of a pneumatic tire and a bead portion abutting on a rim wheel, and the portions protecting a carcass layer inside the tire.

### [Retreaded tire]

The retreaded tire according to an embodiment of the present invention is a retreaded tire including a case rubber including a rubber composition, wherein, the integrated value of white areas by particles for diameter of 29 µm or more is 15% or less, more preferably 12% or less, and still more preferably 10% or less of an integrated value of white areas by particles for diameter from 3 to 57 µm in an examination of the cross section of the rubber composition with a dispergrader based on ASTM D7723,, and the total content of zinc oxide, a fatty acid, and a zinc salt of fatty acid is 2 parts by weight or more and less than 13 parts by weight per 100 parts by weight of a rubber.

The retreaded tire according to an embodiment of the present invention has a value (white area%) × (integrated value of white areas by particles for diameter of 29 µm or more) / (integrated value of white areas by particles for diameter from 3 to 57 µm) of 0.2% or less, preferably 0.18% or less, and more preferably 0.165% or less, when the cross-section of the rubber composition is examined with a dispergrader, as described above.

The retreaded tire according to an embodiment of the present invention has, for example, a tread portion, a crown portion, a side wall portion constituting the tire side surface, and a bead portion abutting on a rim wheel. In addition, the retreaded tire according to an embodiment of the present invention includes, for example, a bead core and a carcass layer. On the inner side of the carcass layer in the tire radial direction, an inner liner, which is a highly airtight rubber layer equivalent to a tube, is disposed.

The retreaded tire according to an embodiment of the present invention is produced from a base tire by a method such as, for example, a precuring method and a remolding method.

### [Method for producing retreaded tire]

The retreaded tire according to an embodiment of the present invention is produced, for example, by the following method, which is a precuring method.

According to an embodiment of the present invention, the aggregates of the fatty acid or zinc salt of fatty acid are dissolved to prevent from aggregation, and the increase in fracture nucleuses is suppressed. The effect can be exerted, regardless of the production method of the retreaded tire, such as a precuring method or a remolding method.

The method for producing the retreaded tire according to an embodiment of the present invention includes, for example, steps of: producing a base tire; and forming a tread by adhering a tread pattern which is formed by fixing and vulcanized in advance onto the base tire via a cushion rubber.

To produce the retreaded tire according to an embodiment of the present invention, only a base tire including a case rubber including a rubber composition having a total content of a fatty acid, zinc oxide, and a zinc salt of fatty acid of 2 parts by weight or more and less than 13 parts by weight per 100 parts by weight of the rubber may be selectively used.

The retreaded tire according to an embodiment of the present invention having the total content of zinc oxide, a fatty acid, and a zinc salt of fatty acid in the range described above achieves enhanced properties of the retreaded tire such as high fracture resistance, and the component composition of the case rubber of the retreaded tire according to an embodiment of the present invention can be close to the value described above. Thus, the retreaded tire according to an embodiment of the present invention can be efficiently produced.

The rubber composition constituting the case rubber included in the retreaded tire may be produced by mixing a wet master batch including zinc oxide. This enhances dispersibility of zinc oxide to prevent the aggregation of zinc oxide.

The base tire may be produced by selectively using a used tire including a case rubber including a rubber composition having a total content of zinc oxide, a fatty acid, and a zinc salt of fatty acid of 2 parts by weight or more and less than 13 parts by weight per 100 parts by weight of the rubber.

The selective use of only a used tire suitable for producing the retreaded tire according to an embodiment of the present invention allows an efficient production of the retreaded tire according to an embodiment of the present invention.

The following steps are performed: inspecting a collected used tire to determine whether the used tire is retreadable; and abrading away the tread portion from the used tire. Onto the base tire prepared by abrading away the tread portion from the used tire, a vulcanized tread is bound to form a tread portion on the base tire, thereby preparing the retreaded tire.

In a final inspection step, the presence or absence of defects such as flaws in the vulcanized retreaded tire; pressure resistance of the tire; and the like are inspected. In the final inspection step, retreaded tires that satisfy certain criteria are released as products.

The base tire according to an embodiment of the present invention may be produced by a typical method by compounding the rubber composition such that the rubber composition constituting the case rubber of the base tire according to an embodiment of the present invention has the component composition specified above.

The base tire and the retreaded tire according to an embodiment of the present invention are for heavy-duty uses, and among such uses, the retreaded tire with a crown portion having a thickness of 25 mm or more are particularly suitable for more preferred application such as for aircrafts or off the road (OR) . Examples

Next, the present invention will be described in further detail with reference to examples and comparative examples, but the present invention is not limited thereto.

The density of a zinc salt of fatty acid aggregate and resistance against crack growth were measured as follows. <Measurement of aggregate density and integration method>

The aggregate amount and the aggregate particle diameter distribution were determined based on ASTM D7723 for a vulcanized rubber composition.

When the cross section of the rubber composition is examined by a dispergrader, a portion where an aggregate equal to or greater than the resolution is present is observed as a white area having an area corresponding to the size of the aggregate.

The area occupied by the white areas per unit area, expressed in percentages, is defined as white area%.

Resolution for the dispergrader of 3 µm was selected.

In the present specification, an area occupied by aggregates 29 µm or more refers to (white area%) × (integrated value of white areas by particles for diameter of 29 µm or more) / (integrated value of white areas by particles for diameter from 3 to 57 µm).

### <Evaluation of resistance against crack growth>

After Dynamometer test specified in TSO-c62e of "TSO (Technical Standard Order)" of The US FAA (Federal Aviation Administration) was carried out, the tire was cut out to examine the degree of cracking between belt cords.

The tire after the test was cut out to segments in every 60°, and the total number of cracks between the belt cords in six cross sections were expressed in index values (the smaller the value, the better).

### [Examples 1 to 16 and Comparative Examples 1 to 8]

Rubber compositions having compositions and aggregate density distributions shown in Tables 1-1 and 1-2 below, and retreaded tires including case rubbers including the rubber compositions were produced and used to evaluate resistance against crack growth. The results are also shown in Tables 1-1 and 1-2.

Examples 1 to 16 and Comparative Examples 1 to 8 are rubber compositions including a carbon black.

Examples 1 to 11 are rubber compositions including no silica.

Examples 12 to 16 are rubber compositions including a silica. In addition, Example 16 is a rubber composition further including a silane coupling agent.

Comparative Examples 1 to 7 are rubber compositions including no silica, and Comparative Example 8 is a rubber composition including a silica.

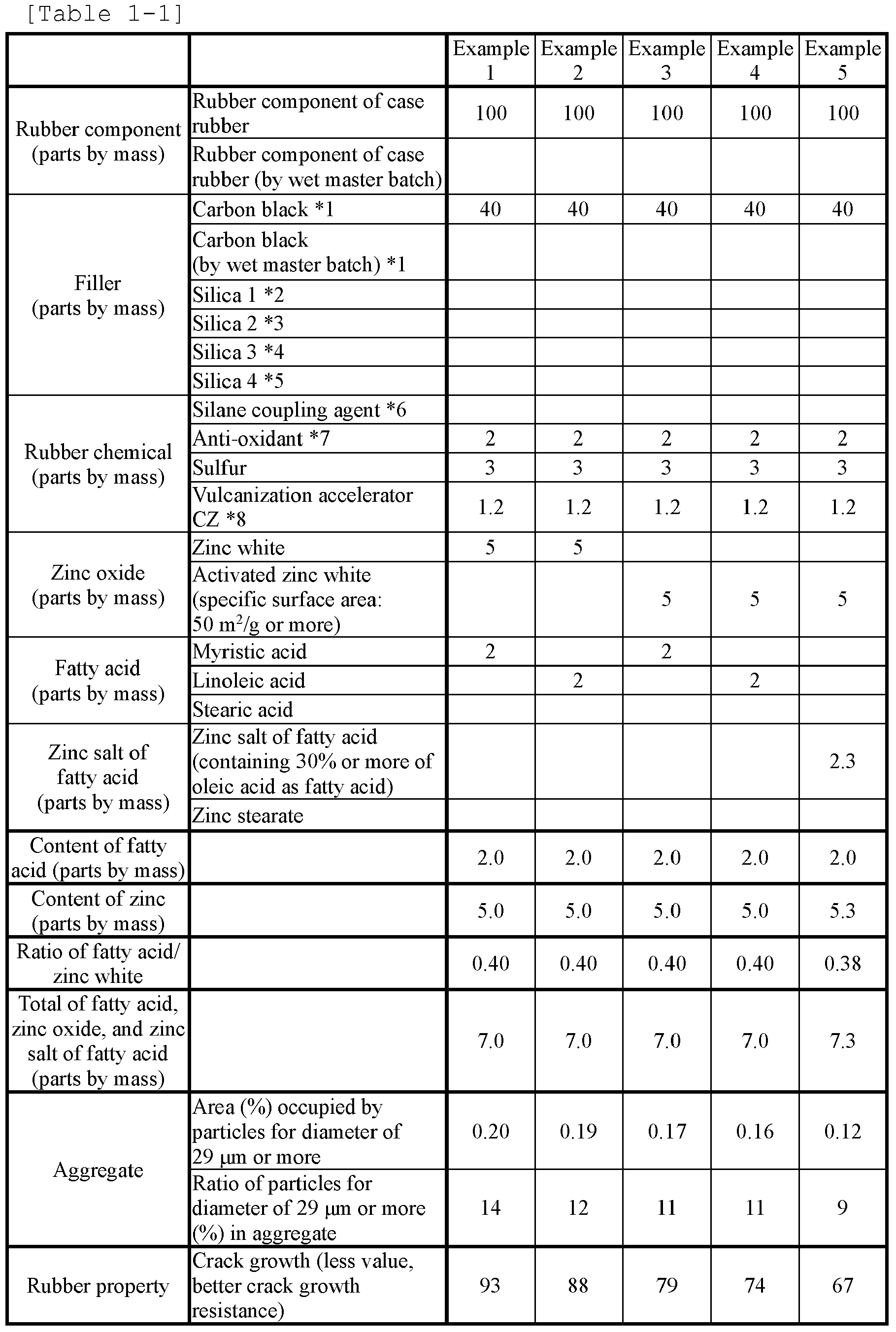

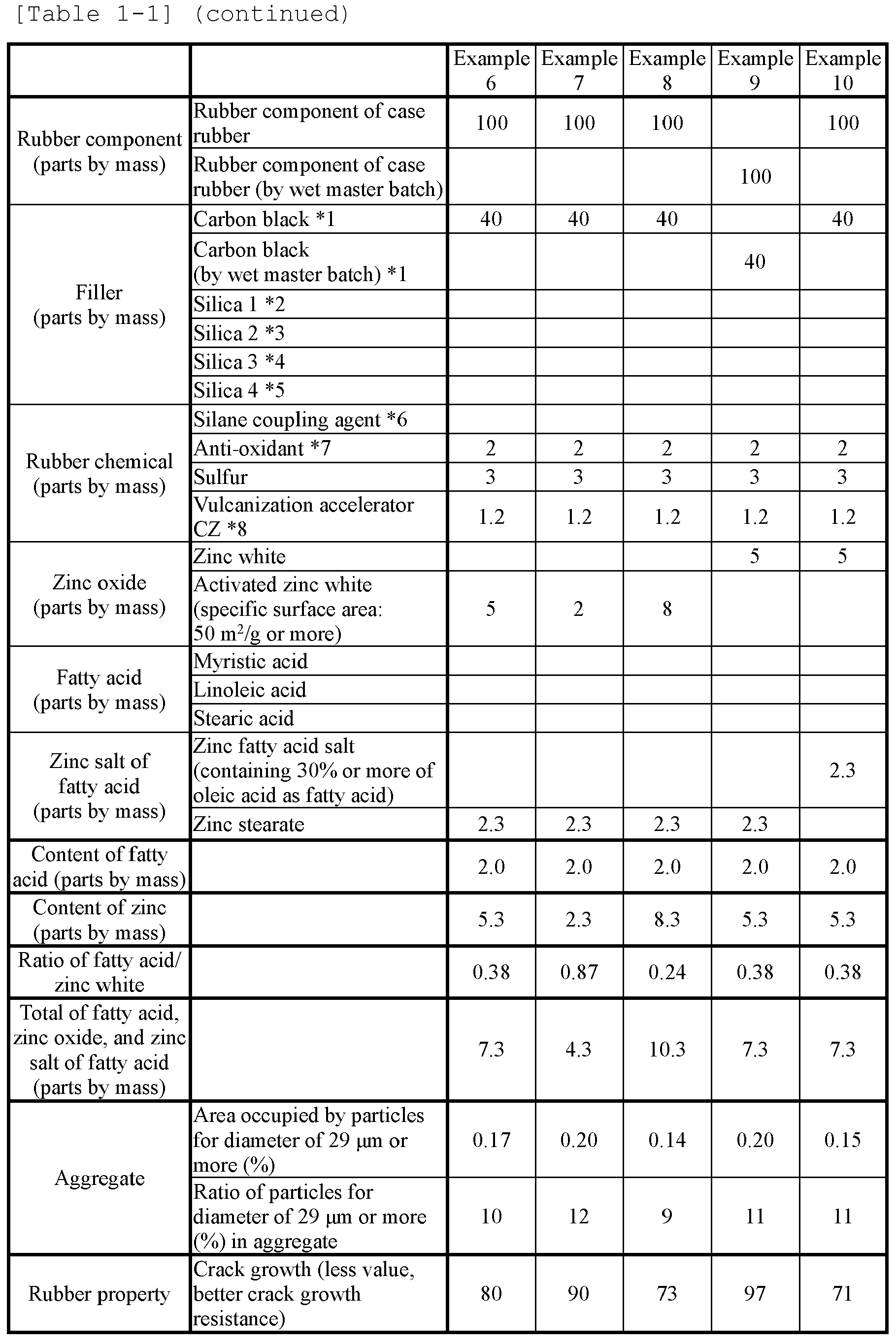

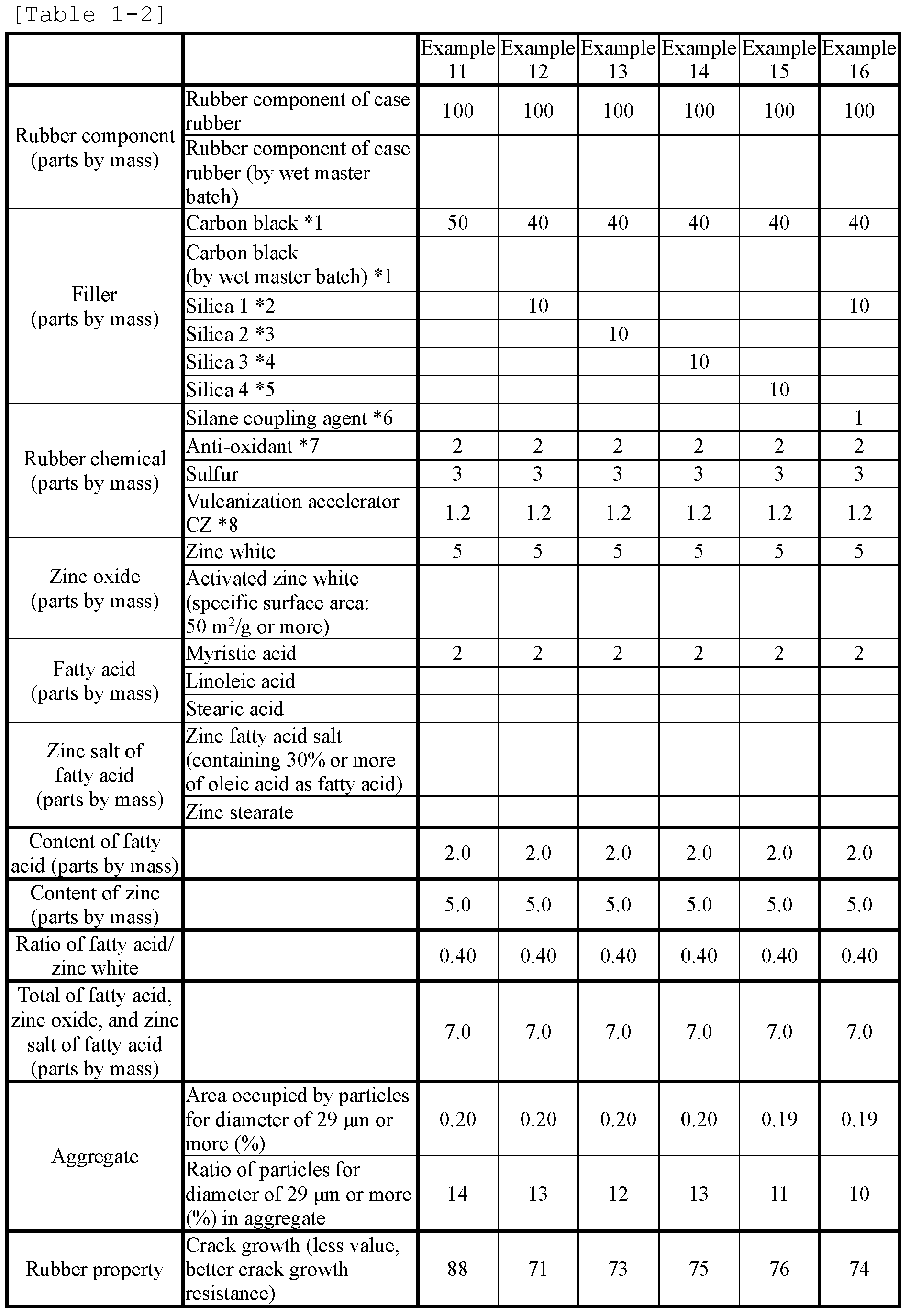

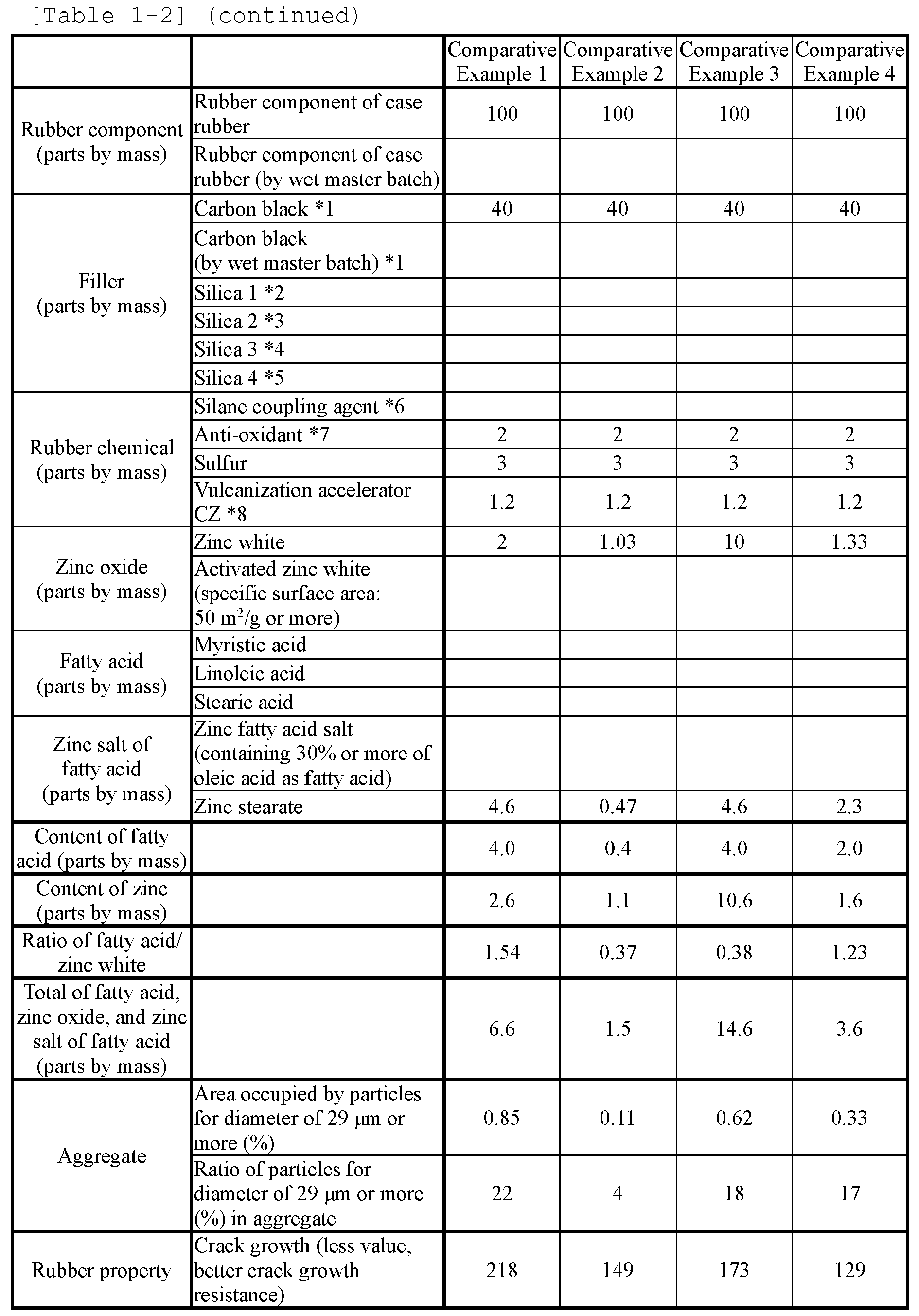

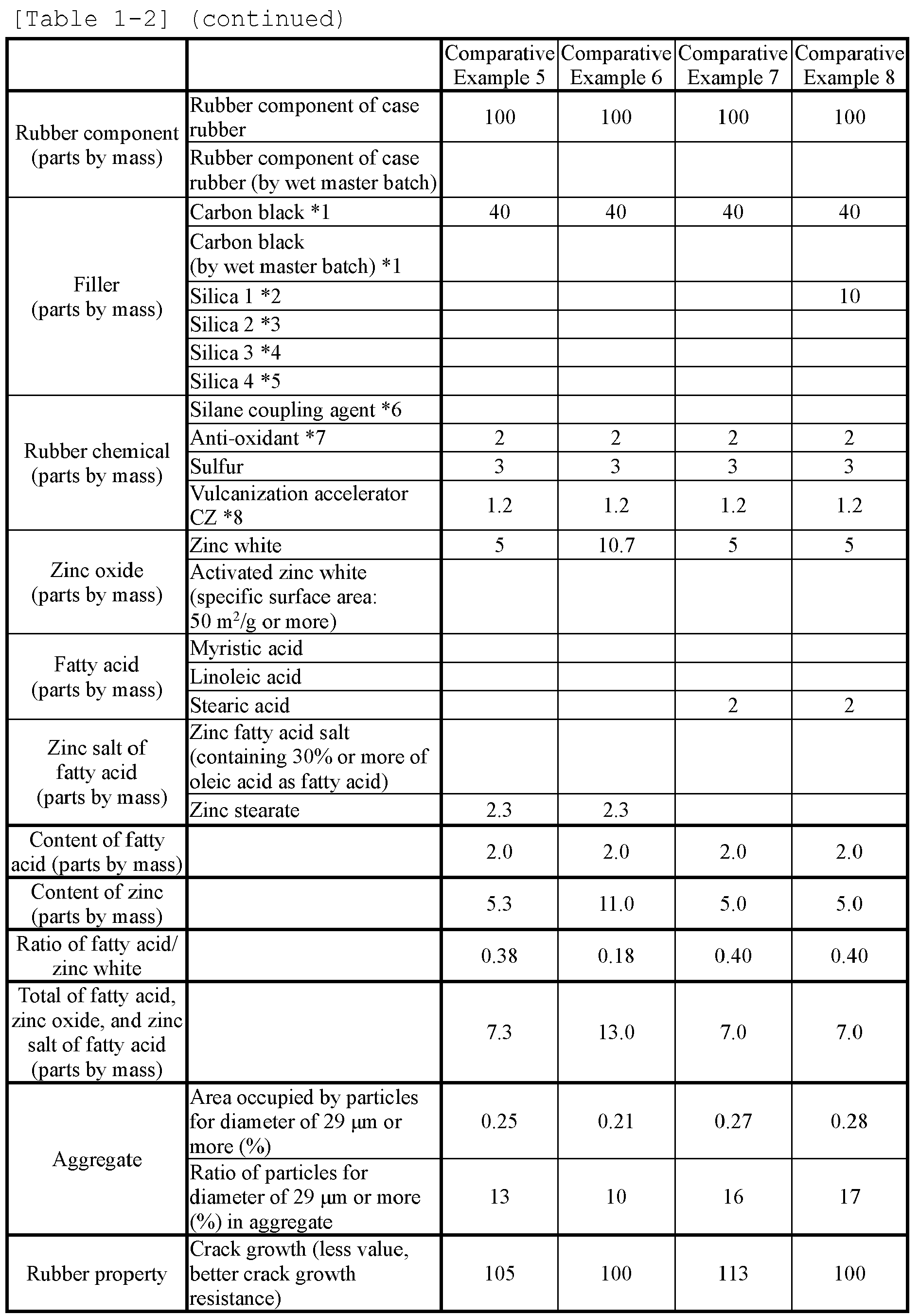

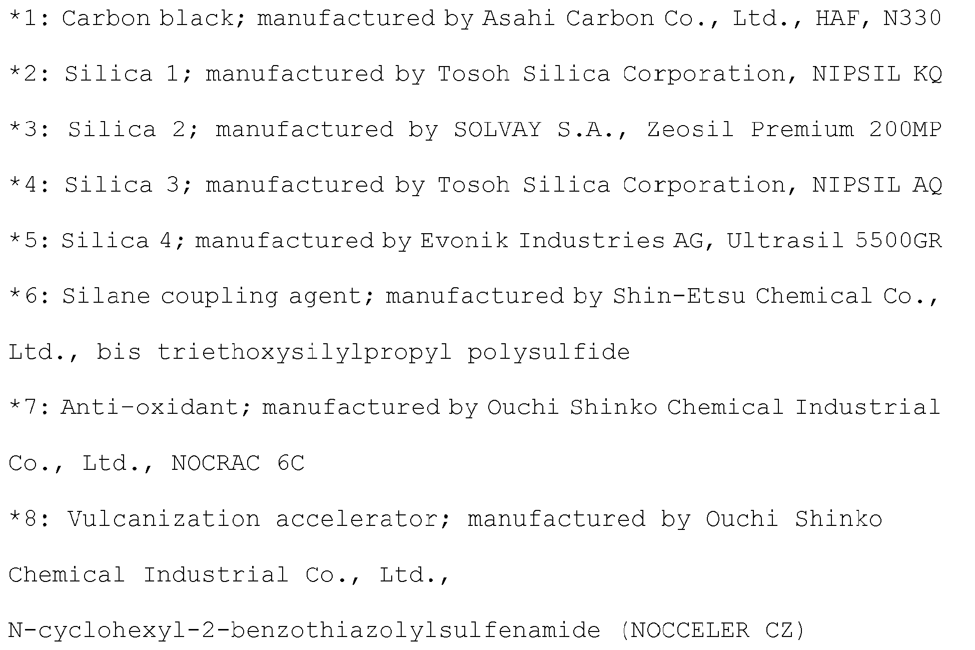

The resistance against crack growth was expressed in index values, the value for Comparative Example 6 being defined as 100.

As shown in Table 1, the case rubbers of Examples 1 to 16, falling within the scope of the composition and the physical properties of the case rubber constituting the retreaded tire according to an embodiment of the present invention, have a good resistance against crack growth compared to Comparative Examples 1 to 8 out of the scope of the composition and the physical properties of the case rubber constituting the retreaded tire according to an embodiment of the present invention.

Results from Examples 1 to 16 and Comparative Examples 1 to 8 showed that the resistance against crack growth of the rubber composition according to an embodiment of the present invention was enhanced.

### Industrial applicability

The present invention provides a retreaded tire having resistance against crack growth and a method for producing the retreaded tire, which can be suitably applied to retreaded tires, particularly for heavy-duty pneumatic tires for aircrafts, trucks, buses, and construction vehicles, and the like; and production thereof.

## Claims

1. A rubber composition,
wherein,
an integrated value of White areas by particles for diameter of 29 µm or more is 15% or less of an integrated value of White areas by particles for diameter from 3 to 57 µm, and
a value of (White Area%) × (integrated value of white areas by particles for diameter of 29 µm or more)/(integrated value of white areas by particles for diameter from 3 to 57 µm) is 0.2% or less in an examination of a cross section of the rubber composition with a dispergrader based on ASTM D7723; and
a total content of zinc oxide, a fatty acid, and a zinc salt of fatty acid is 2 parts by weight or more and less than 13 parts by weight per 100 parts by weight of a rubber.

2. The rubber composition according to claim 1, comprising a fine particle diameter zinc oxide in an amount of 1 part by weight or more and 10 parts by weight or less per 100 parts by weight of the rubber.

3. The rubber composition according to claim 1 or 2, comprising the fine particle diameter zinc oxide with a specific surface area of not less than 50 m²/g in an amount of 0.5 parts by weight or more and 8 parts by weight or less per 100 parts by weight of the rubber.

4. The rubber composition according to any one of claims 1 to 3, comprising the zinc salt of fatty acid, wherein a ratio of a total parts by weight of the fatty acid and a fatty acid component in the zinc salt of fatty acid to parts by weight of zinc oxide is from 0.15 to 1.5.

5. The rubber composition according to any one of claims 1 to 4, wherein a content attributed to an unsaturated fatty acid is 30% or more in the fatty acid component in the zinc salt of fatty acid.

6. The rubber composition according to any one of claims 1 to 5, comprising a filler.

7. The rubber composition according to any one of claims 1 to 6, comprising both carbon black and silica as the filler, wherein an amount of silica relative to a total amount of the filler is 0% or more and 30% or less.

8. A retreaded tire comprising the rubber composition described in any one of claims 1 to 7.

9. The retreaded tire according to claim 8, which is a heavy-duty tire.

10. A method for producing a retreaded tire, selectively using only a base tire including a case rubber, the case rubber including a rubber composition having a total content of zinc oxide, a fatty acid, and a zinc salt of fatty acid of 2 parts by weight or more and less than 13 parts by weight per 100 parts by weight of a rubber to produce a retreaded tire including the case rubber including the rubber composition,
wherein, an integrated value of white areas by particles for diameter of 29 µm or more is 15% or less of an integrated value of white areas by particles for diameter from 3 to 57 µm in the rubber composition of the case rubber in an examination of a cross section of the rubber composition with a dispergrader based on ASTM D7723.

11. The method for producing a retreaded tire according to claim 10, wherein the rubber composition constituting the case rubber included in the retreaded tire is a rubber composition produced by mixing a wet master batch including zinc oxide.

12. The method for producing a retreaded tire according to claim 10 or 11, wherein the base tire is produced by selectively using a used tire including a case rubber including a rubber composition having a total content of zinc oxide, a fatty acid, and a zinc salt of fatty acid of 2 parts by weight or more and less than 13 parts by weight per 100 parts by weight of a rubber.

13. The method for producing a retreaded tire according to any one of claims 10 to 12, wherein the retreaded tire is produced by a precuring method or a remolding method.

## Patentansprüche

1. Gummizusammensetzung, wobei:
ein integrierter Wert von Weißen Bereichen nach Teilchen für einen Durchmesser von 29 µm oder mehr 15 % oder weniger eines integrierten Wertes von Weißen Bereichen nach Teilchen für einen Durchmesser von 3 bis 57 µm beträgt,
ein Wert von (Weißer Bereich %) x (integrierter Wert von Weißen Bereichen nach Teilchen für einen Durchmesser von 29 µm oder mehr) / (integrierter Wert von Weißen Bereichen nach Teilchen für einen Durchmesser von 3 bis 57 µm) 0,2 % oder weniger bei einer Untersuchung eines Querschnitts der Gummizusammensetzung mit einem DisperGrader auf Grundlage von ASTM D7723 beträgt und
eine Gesamtmenge an Zinkoxid, einer Fettsäure und einem Zinksalz einer Fettsäure 2 Gewichtsteile oder mehr und weniger als 13 Gewichtsteile je 100 Gewichtsteile eines Gummis beträgt.

2. Gummizusammensetzung nach Anspruch 1, die ein Zinkoxid mit feinem Teilchendurchmesser in einer Menge von 1 Gewichtsteil oder mehr und 10 Gewichtsteilen oder weniger je 100 Gewichtsteile des Gummis umfasst.

3. Gummizusammensetzung nach Anspruch 1 oder 2, die das Zinkoxid mit feinem Teilchendurchmesser mit einer spezifischen Oberfläche von nicht weniger als 50 m²/g in einer Menge von 0,5 Gewichtsteilen oder mehr und 8 Gewichtsteilen oder weniger je 100 Gewichtsteile des Gummis umfasst.

4. Gummizusammensetzung nach einem der Ansprüche 1 bis 3, die das Zinksalz einer Fettsäure umfasst, wobei ein Verhältnis eines Gesamtgewichtsteils der Fettsäure und eines Fettsäurebestandteils in dem Zinksalz einer Fettsäure zu Gewichtsteilen von Zinkoxid 0,15 bis 1,5 beträgt.

5. Gummizusammensetzung nach einem der Ansprüche 1 bis 4, wobei ein Gehalt, der auf eine ungesättigte Fettsäure zurückzuführen ist, 30 % oder mehr in dem Fettsäurebestandteil in dem Zinksalz einer Fettsäure beträgt.

6. Gummizusammensetzung nach einem der Ansprüche 1 bis 5, die einen Füllstoff umfasst.

7. Gummizusammensetzung nach einem der Ansprüche 1 bis 6, die sowohl Ruß als auch Siliziumdioxid als den Füllstoff umfasst, wobei eine Menge an Siliziumdioxid im Verhältnis zu einer Gesamtmenge des Füllstoff 0 % oder mehr und 30 % oder weniger beträgt.

8. Runderneuerter Reifen, der die Gummizusammensetzung nach einem der Ansprüche 1 bis 7 umfasst.

9. Runderneuerter Reifen nach Anspruch 8, der ein Schwerlastreifen ist.

10. Verfahren zum Herstellen eines runderneuerten Reifens, unter selektiver Verwendung nur eines Grundreifens, der einen Mantelgummi einschließt, wobei der Mantelgummi eine Gummizusammensetzung einschließt, die einen Gesamtgehalt an Zinkoxid, einer Fettsäure und einem Zinksalz einer Fettsäure von 2 Gewichtsteilen oder mehr und weniger als 13 Gewichtsteilen je 100 Gewichtsteile eines Gummis aufweist, um einen runderneuerten Reifen herzustellen, der den Mantelgummi einschließt, der die Gummizusammensetzung einschließt,
wobei ein integrierter Wert von weißen Bereichen nach Teilchen für einen Durchmesser von 29 µm oder mehr 15 % oder weniger eines integrierten Wertes von weißen Bereichen nach Teilchen für einen Durchmesser von 3 bis 57 µm in der Gummizusammensetzung des Mantelgummis bei einer Untersuchung eines Querschnitts der Gummizusammensetzung mit einem DisperGrader auf Grundlage von ASTM D7723 beträgt.

11. Verfahren zum Herstellen eines runderneuerten Reifens nach Anspruch 10, wobei die Gummizusammensetzung, die den Mantelgummi darstellt, der in dem runderneuerten Reifen eingeschlossen ist, eine Gummizusammensetzung ist, die durch Mischen eines nassen Masterbatches hergestellt ist, die Zinkoxid einschließt.

12. Verfahren zum Herstellen eines runderneuerten Reifens nach Anspruch 10 oder 11, wobei der Grundreifen unter selektiver Verwendung eines gebrauchten Reifens hergestellt wird, der einen Mantelgummi einschließt, der eine Gummizusammensetzung einschließt, die einen Gesamtgehalt an Zinkoxid, einer Fettsäure und einem Zinksalz einer Fettsäure von 2 Gewichtsteilen oder mehr und weniger als 13 Gewichtsteilen je 100 Gewichtsteile eines Gummis aufweist.

13. Verfahren zum Herstellen eines runderneuerten Reifens nach einem der Ansprüche 10 bis 12, wobei der runderneuerte Reifen durch ein Vorvulkanisierungsverfahren oder ein Runderneuerungsverfahren hergestellt wird.

## Revendications

1. Composition de caoutchouc, dans laquelle :
une valeur intégrée de zones blanches par particules pour un diamètre de 29 µm ou plus représente 15% ou moins d'une valeur intégrée de zones blanches par particules pour un diamètre compris entre 3 et 57 µm ; et
une valeur de (% de zones blanches) x (valeur intégrée de zones blanches par particules pour un diamètre de 29 µm ou plus) / (valeur intégrée de zones blanches par particules pour un diamètre compris entre 3 et 57 µm) représente 0,2% ou moins dans un examen d'une section transversale de la composition de caoutchouc avec un dispergrader sur la base de la norme ASTM D7723 ; et
une teneur totale en oxyde de zinc, en acide gras, et en sel de zinc d'acide gras correspond à 2 parties en poids ou plus et à moins de 13 parties en poids pour 100 parties en poids d'un caoutchouc.

2. Composition de caoutchouc selon la revendication 1, comprenant un oxyde de zinc pour un diamètre de particules fines en une quantité de 1 partie en poids ou plus et de 10 parties en poids ou moins pour 100 parties en poids du caoutchouc.

3. Composition de caoutchouc selon la revendication 1 ou 2, comprenant l'oxyde de zinc à diamètre de particules fines, avec une aire de surface spécifique non inférieure à 50 m²/g dans une quantité de 0,5 partie en poids ou plus et de 8 parties en poids ou moins pour 100 parties en poids du caoutchouc.

4. Composition de caoutchouc selon l'une quelconque des revendications 1 à 3, comprenant le sel de zinc d'acide gras, dans laquelle un rapport entre les parties en poids totales de l'acide gras et un composant de l'acide gras dans le sel de zinc d'acide gras et les parties en poids de l'oxyde de zinc est compris entre 0,15 et 1,5.

5. Composition de caoutchouc selon l'une quelconque des revendications 1 à 4, dans laquelle une teneur attribuée à un acide gras non saturé représente 30% ou plus dans le composant d'acide gras dans le sel de zinc de l'acide gras.

6. Composition de caoutchouc selon l'une quelconque des revendications 1 à 5, comprenant une charge.

7. Composition de caoutchouc selon l'une quelconque des revendications 1 à 6, comprenant à la fois du noir de carbone et de la silice comme la charge, dans laquelle une quantité de la silice par rapport à une quantité totale de la charge représente 0% ou plus et 30% ou moins.

8. Bandage pneumatique rechapé comprenant la composition de caoutchouc décrite dans l'une quelconque des revendications 1 à 7.

9. Bandage pneumatique rechapé selon la revendication 8, constituant un bandage pneumatique pour poids lourds.

10. Procédé de production d'un bandage pneumatique rechapé, utilisant de manière sélective uniquement un bandage pneumatique de base incluant un caoutchouc de carcasse, le caoutchouc de carcasse incluant une composition de caoutchouc comportant une teneur totale en oxyde de zinc, en acide gras et en sel de zinc d'acide gras de 2 parties en poids ou plus et moins de 13 parties en poids pour 100 parties en poids d'un caoutchouc pour produire un bandage pneumatique rechapé incluant le caoutchouc de carcasse incluant la composition de caoutchouc ;
dans lequel une valeur intégrée de zones blanches par particules pour un diamètre de 29 µm ou plus représente 15% ou moins d'une valeur intégrée de zones blanches par particules pour un diamètre compris entre 3 et 57 µm dans la composition de caoutchouc du caoutchouc de carcasse dans un examen d'une section transversale de la composition de caoutchouc avec un dispergrader sur la base de la norme ASTM 07723.

11. Procédé de production d'un bandage pneumatique rechapé selon la revendication 10, dans lequel la composition de caoutchouc constituant le caoutchouc de carcasse inclus dans le bandage pneumatique rechapé est une composition de caoutchouc produite en mélangeant un mélange maître incluant de l'oxyde de zinc.

12. Procédé de production d'un bandage pneumatique rechapé selon les revendications 10 ou 11, dans lequel le bandage pneumatique de base est produit en utilisant de manière sélective un bandage pneumatique usé incluant un caoutchouc de carcasse incluant une composition de caoutchouc ayant une teneur totale en oxyde de zinc, en acide gras et en sel de zinc d'acide gras de 2 parties en poids ou plus et moins de 13 parties en poids pour 100 parties en poids d'un caoutchouc.

13. Procédé de production d'un bandage pneumatique rechapé selon l'une quelconque des revendications 10 à 12, dans lequel le bandage pneumatique rechapé est produit par un procédé de précuisson ou un procédé de remoulage.
